(19) **Europäisches Patentamt European Patent Office Office européen des brevets**

(11) **EP 2 899 229 B1**

(12) **EUROPEAN PATENT SPECIFICATION**

(45) Date of publication and mention of the grant of the patent:
**16.08.2017 Bulletin 2017/33**

(51) Int Cl.:
*C08L 67/02* (2006.01)          *C08G 63/82* (2006.01)
*C08K 5/52* (2006.01)           *C08G 63/183* (2006.01)

(21) Application number: **13838492.0**

(22) Date of filing: **12.09.2013**

(86) International application number:
**PCT/JP2013/074658**

(87) International publication number:
**WO 2014/045995 (27.03.2014 Gazette 2014/13)**

(54) **POLYETHYLENE TEREPHTHALATE COMPOSITION, AND METHOD FOR PRODUCING SAME**

POLYETHYLENTEREPHTHALATZUSAMMENSETZUNG UND HERSTELLUNGSVERFAHREN DAFÜR

COMPOSITION DE POLY(TÉRÉPHTALATE D'ÉTHYLÈNE), ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2012 JP 2012207228**

(43) Date of publication of application:
**29.07.2015 Bulletin 2015/31**

(73) Proprietor: **Toray Industries, Inc.**
**Tokyo, 103-8666 (JP)**

(72) Inventors:
• **KOJIMA, Hiroji**
  **Mishima-shi**
  **Shizuoka 411-8652 (JP)**
• **MATSUMOTO, Mayumi**
  **Mishima-shi**
  **Shizuoka 411-8652 (JP)**
• **SAKAMOTO, Jun**
  **Otsu-shi**
  **Shiga 520-8558 (JP)**

(74) Representative: **Webster, Jeremy Mark**
**Mewburn Ellis LLP**
**City Tower**
**40 Basinghall Street**
**London EC2V 5DE (GB)**

(56) References cited:
EP-A1- 2 407 515      EP-A1- 2 495 283
WO-A1-2010/103945   WO-A1-2011/052290
WO-A1-2012/032876   JP-A- 2003 073 466
JP-A- 2008 007 750

## Description

### Technical Field

The present invention relates to a polyethylene terephthalate composition excellent in hydrolysis resistance, and a method for producing same.

### Background Art

Polyethylene terephthalate is excellent in mechanical characteristics, heat characteristics, chemical resistance, electrical characteristics, and formability, and is employed for various uses.

However, since polyethylene terephthalate deteriorates in mechanical properties due to hydrolysis, various studies have been done in order to restrain hydrolysis in the case where the polyethylene terephthalate is used over a long period of time or the case where the polyethylene terephthalate is used in a state where there is humidity. Furthermore, in optical uses, when polyethylene terephthalate is used in a processing step or for a long period of time, crystallization of a film thereof proceeds, and film stain (cloudiness) due to the deposition of oligomers, such as a cyclic trimer, becomes a cause of optical characteristic deterioration. Particularly , a film for a solar cell front sheet, which is required to have optical characteristics and a service life outdoors for 20 years or longer, needs to have high hydrolysis resistance, elongation retention ratio, optical characteristics and low-oligomer property.

For example, Patent document 1 describes a polyethylene terephthalate composition whose o-chlorophenol (hereinafter, sometimes termed OCP) insolubles are small in amount and whose moist heat resistance has been bettered, and also describes a production method using a direct polymerization method in detail.

However, in the production by the direct polymerization method, white extraneous matter, although in a small amount, is produced and becomes a cause of an extraneous matter (hereinafter, sometimes termed fisheye), making application to optical uses difficult.

Patent document 2 describes a production method for a polyethylene terephthalate whose extraneous matter is small in amount, but what is disclosed in Patent document 2 is a technology in which 31 or more pieces of extraneous matter (fisheyes) are contained in every 8 square centimeters, and is insufficient for employment in optical uses.

### Prior Art Documents

### Patent Documents

    Patent document 1: International Publication WO 2011/052290
    Patent document 2: Japanese Unexamined Patent Publication (Kokai) No. 2007-70462

### Summary of the Invention

### Problems to be Solved by the Invention

An object of the invention is to provide a polyethylene terephthalate composition that solves these related-art defects, that are excellent in hydrolysis resistance, elongation retention ratio, optical characteristics, and low-oligomer property, and that is suitable for solar cell film uses.

### Means of Solving the Problems

That is, the object of the present invention is achieved by a polyethylene terephthalate composition which contains an alkali metal phosphate compound in an amount greater than or equal to 1.0 mol/ton and less than or equal to 3.0 mol/ton in terms of an alkali metal element, and contains a phosphorus element in an amount greater than or equal to 1.5 mol/ton and less than or equal to 5.0 mol/ton, wherein a white extraneous matter containing a phosphorus element and an alkali metal element and being greater than or equal to 50 $\mu$m is in an amount less than or equal to 1 ppm in volume fraction, an inherent viscosity is greater than or equal to 0.65 dl/g and less than 0.90 dl/g, a content of a cyclic trimer is less than or equal to 0.6 wt%, an amount of carboxylic acid terminal groups is less than or equal to 15 eq/ton, and an increase in the amount of the carboxylic acid terminal groups ($\Delta$COOH) when a moist heat treatment (in a 155°C and 100% RH atmosphere, for 4 hours) is performed is less than or equal to 30 eq/ton.

**Advantageous Effect of the Invention**

According to the present invention, a polyethylene terephthalate composition excellent in long-period hydrolysis resistance and optical characteristics can be provided. Furthermore, by forming the composition of the invention into a biaxially stretched film, the composition of the invention can be provided for magnetic material uses, electrical material uses such as capacitors, package uses, and optical uses, and particularly for uses for films for solar cell front sheets that require long-period hydrolysis resistance, optical characteristics and low-oligomer property.

**Forms for Carrying Out the Invention**

The polyethylene terephthalate composition of the present invention is a polyethylene terephthalate composition which contains an alkali metal phosphate compound in an amount greater than or equal to 1.0 mol/ton and less than or equal to 3.0 mol/ton in terms of an alkali metal element, and a phosphorus element in an amount greater than or equal to 1.5 mol/ton and less than or equal to 5.0 mol/ton, wherein a white extraneous matter containing a phosphorus element and an alkali metal element and being greater than or equal to 50 $\mu$m is in an amount less than or equal to 1 ppm in volume fraction, an inherent viscosity is greater than or equal to 0.65 dl/g and less than 0.90 dl/g, a content of a cyclic trimer is less than or equal to 0.6 wt%, an amount of carboxylic acid terminal groups is less than or equal to 15 eq/ton, and an increase in the amount of the carboxylic acid terminal groups ($\Delta$COOH) when a moist heat treatment (in a 155°C and 100% RH atmosphere, for 4 hours) is performed is less than or equal to 30 eq/ton.

The polyethylene terephthalate composition of the present invention is a polyethylene terephthalate produced from terephthalic acid and an ester-forming derivative thereof, and ethylene glycol. As for the polyethylene terephthalate composition, it is necessary that 98 mol% or more of the total dicarboxylic acid component be terephthalic acid and 98 mol% or more of the total glycol component be ethylene glycol, in view of mechanical characteristics, hydrolysis resistance and heat resistance.

An alkali metal phosphate compound contained in the polyethylene terephthalate composition of the present invention needs to be present in an amount greater than or equal to 1.0 mol/ton and less than or equal to 3.0 mol/ton in terms of alkali metal element in view of hydrolysis resistance and, furthermore, is preferred to be present in an amount greater than or equal to 1.0 mol/ton and less than or equal to 2.0 mol/ton in view of hydrolysis resistance.

As the alkali metal element in the present invention, sodium, potassium, lithium, etc. can be cited. Among these, the alkali metal element is preferred to be sodium in view of hydrolysis resistance and white extraneous matter, and is further preferred to be sodium dihydrogen phosphate in view of hydrolysis resistance.

The phosphorus element contained in the polyethylene terephthalate composition of the present invention is present in an amount greater than or equal to 1.5 mol/ton and less than or equal to 5.0 mol/ton in view of hydrolysis resistance. Furthermore, the phosphorus element is more preferred to be in an amount greater than or equal to 2.0 mol/ton and less than or equal to 4.0 mol/ton in view of hydrolysis resistance. As a compound containing a phosphorus element, it is possible to use, besides the alkali metal phosphate compound, phosphoric acid, phosphorous acid, phosphoric acid esters such as trimethyl phosphate and triethyl phosphate, phosphorus compounds such as ethyl diethyl phosphonoacetate can be used. However, in view of hydrolysis resistance, it is preferable to use phosphoric acid and an alkali metal phosphate compound together.

A diethylene glycol content in the present invention being greater than or equal to 0.8 wt% improves orientation at the time of film formation, leading to improvement in hydrolysis resistance and heat resistance, and therefore is more preferable. If the diethylene glycol content is less than 1.5 wt% and, further, less than 1.0 wt%, the increase in the amount of carboxylic acid terminal groups caused by a pyrolytic reaction at the time of melting is restrained, so the hydrolysis less readily occurs.

To have the amount of diethylene glycol within a targeted range, melt polymerization may be performed at 275°C to 285°C within four hours, so that the by-production of diethylene glycol during the melt polymerization can be restrained.

The white extraneous matter in the polyethylene terephthalate composition contains phosphorus element and an alkali metal element, and becomes extraneous matter (fisheye) when the composition is made into a film. Therefore, the content thereof needs to be 1 ppm or less in volume fraction relative to the polyethylene terephthalate composition and, furthermore, is preferred to be 0.5 ppm or less and, particularly, 0 ppm.

To make the amount of white extraneous matter less than or equal to 1 ppm in volume fraction, it is necessary to add an alkali metal phosphate compound in the form of a greater than or equal to 2.0 mmol/liter and less than or equal to 30 mmol/liter ethylene glycol solution and, furthermore, the concentration thereof is preferred to be greater than or equal to 10.0 mmol/liter and less than or equal to 30 mmol/liter in view of hydrolysis resistance. The white extraneous matter is presumed to be made into a white extraneous matter by a condensation reaction that is caused by the alkali metal phosphate compound contacting a low polymer of ethylene terephthalate at high temperature. In order to lessen the white extraneous matter and prevent reduction of hydrolysis resistance, it is more preferable to add an alkali metal phosphate compound in the form of a greater than or equal to 2.0 mmol/liter and less than or equal to 30 mmol/liter ethylene glycol solution.

As for preparation of the ethylene glycol solution of an alkali metal phosphate compound, it is preferable to add and dissolve the alkali metal phosphate compound into ethylene glycol heated to a temperature greater than or equal to than 50°C and less than 100°C so that the alkali metal phosphate compound does not remain undissolved, in view of restraining production of the white extraneous matter. The concentration at the time of heated dissolution of the alkali metal phosphate compound in ethylene glycol is preferred to be greater than or equal to 200 mmol/liter and less than or equal to 1000 mmol/liter, and it is preferable that the solution be then diluted to a concentration greater than or equal to 2.0 mmol/liter and less than or equal to 30 mmol/liter before being added.

The cyclic trimer content in the invention is less than or equal to 0.6 wt% relative to the polyethylene terephthalate composition in view of preventing the cloudiness of the film. Furthermore, the content is preferred to be less than or equal to 0.5 wt%. As for the lower limit of the cyclic trimer content, the content is more favorable the less it is, but is considered to be about 0.15 wt% in the related-art solid phase polymerization of polyethylene terephthalate. By providing a step of extracting cyclic trimers from the polymer, the cyclic trimer content can be brought to 0.0 wt%.

In the polyethylene terephthalate composition of the present invention, the increase in the amount of carboxylic acid terminal groups (ΔCOOH) obtained when the treatment in 155°C water vapor is performed for 4 hours is less than or equal to 30 eq/ton. The ΔCOOH being less than or equal to 30 eq/ton improves hydrolysis resistance, and is therefore preferable. In particular, the ΔCOOH being less than or equal to 25 eq/ton further improves hydrolysis resistance, and is preferable.

Since the ΔCOOH is the increase in the amount of carboxylic acid terminal groups obtained when a certain hydrolysis treatment is performed, the ΔCOOH is an index that represents the hydrolysis velocity. Therefore, the ΔCOOH being large means that the hydrolysis reaction readily proceeds, and is an important index in evaluating a polyester that needs to have high hydrolysis resistance, for example, for solar cell uses.

The ΔCOOH can be caused to be less than or equal to 30 eq/ton by restraining the decomposition reaction velocity by a buffering agent or the like, such as phosphoric acid/alkali metal phosphate compound, and reducing the amount of carboxylic acid end groups by solid phase polymerization. As for the ratio of phosphoric acid/alkali metal phosphate compound in this occasion, it is preferable that phosphoric acid be in an amount greater than or equal to 0.8 molar time and less than or equal to 1.4 molar times the alkali metal phosphate compound.

As for the lower limit of ΔCOOH, the lower the lower limit, the more favorable the hydrolysis resistance becomes; however, the lower limit thereof is about 5 eq/t in a polyethylene terephthalate that has an ester bond.

As for the polyethylene terephthalate composition of the present invention, in view of hydrolysis resistance and film formability, the inherent viscosity is greater than or equal to 0.65 dl/g and less than 0.90 dl/g and, more preferably, greater than or equal to 0.70 dl/g and less than 0.85 dl/g.

In the polyethylene terephthalate composition of the present invention, the amount of carboxylic acid terminal groups is less than or equal to 15 eq/ton and, more preferably, 12 eq/ton, in view of hydrolysis resistance. As for the lower limit of the amount of carboxylic acid terminal groups, the lower the lower limit, the more favorable the hydrolysis resistance becomes; however, in the polycondensation reaction and the solid phase polymerization reaction according to the related art, the lower limit is about 5 eq/t, and an excess amount of an end sealing agent is needed in order to cause the amount of carboxylic acid terminal groups to be 0 eq/t.

The polyethylene terephthalate composition of the present invention is preferred to contain a promoter for the polycondensation reaction in view of hydrolysis resistance. The promoter is preferred to be at least one or more species of manganese compounds, such as manganese acetate and manganese hydroxide, magnesium compounds, such as magnesium acetate, magnesium carbonate and magnesium hydroxide, and calcium compounds, such as calcium acetate and calcium hydroxide, in view of heat resistance and hydrolysis resistance. In the case where such a promoter is added, it is preferable that the molar ratio (M/P) between the sum (M) of 1.0 time mol of the promoter metal element or elements and 0.5 time mol of alkali metal element or elements in the polyethylene terephthalate composition and the phosphorus element (P) be greater than or equal to 1.00 and less than or equal to 1.20, in view of hydrolysis resistance and heat resistance.

The polyethylene terephthalate composition of the present invention can be produced by conducting an esterification reaction and conducting a polycondensation reaction by supplying a slurry of terephthalic acid and ethylene glycol to a low polymer of ethylene terephthalate (herein, the low polymer of ethylene terephthalate refers to a compound in which ethylene terephthalate units form a 15-or-less-mer.).

With regard to the esterification reaction, it is possible to use a related-art method in which while a low polymer of ethylene terephthalate in a molten state is being stirred at a temperature greater than or equal to 240°C and less than or equal to 260°C, a slurry of terephthalic acid and ethylene glycol is gradually added and water is distilled. The alkali metal phosphate compound needs to be added at an arbitrary stage during a period from prior to the start of the esterification reaction until the polycondensation reaction is started. As for the addition method for the alkali metal phosphate compound, it is preferable that the alkali metal phosphate compound in the form of a greater than or equal to 2.0 mmol/liter and less than or equal to 30 mmol/liter ethylene glycol solution be added so as to be in an amount greater than or equal to 1.0 mol/ton and less than or equal to 3.0 mol/ton in terms of alkali metal relative to the polyethylene terephthalate composition, in view of lessening the white extraneous matter, and, furthermore, it is more preferable that the concentration be greater than or equal to 4.0 mmol/litter and less than or equal to 30 mmol/liter. Furthermore, when the ethylene glycol solution of the alkali metal phosphate compound is added, it is preferable to add the ethylene glycol solution while performing the stirring at a peripheral speed greater than or equal to 3.0 m/s and less than or equal to 30 m/s, in view of lessening the white extraneous matter.

Furthermore, by adding ethylene glycol in an amount greater than or equal to 0.1 molar time and less than or equal to 0.5 molar time the total dicarboxylic acid component contained in the polyethylene terephthalate composition during the period from a substantial end of the esterification reaction till the start of the polycondensation reaction, unreacted carboxylic acid terminal groups are esterified by ethylene glycol and the amount of carboxylic acid terminal groups of the polyethylene terephthalate composition decreases, so that the hydrolysis resistance improves.

As for polycondensation reaction conditions, it is preferable to perform the polycondensation reaction with a final reached temperature being a temperature greater than or equal to 275°C and less than or equal to 285°C, in view of hydrolysis resistance and of reducing the amount of carboxylic acid terminal group.

As the polycondensation reaction catalyst, known compounds can be used; for example, antimony trioxide, titanium alkoxide, titanium chelate compounds, germanium dioxide, etc. can be cited. Among these, the polycondensation reaction catalyst is preferred to be antimony trioxide in view of polycondensation reactivity and heat resistance.

With respect to the polyethylene terephthalate composition obtained in this manner, solid phase polymerization is performed in order to improve the hydrolysis resistance by further reducing the amount of carboxylic acid terminal groups.

As for solid phase polymerization conditions, it is preferable in view of hydrolysis resistance to end the polycondensation reaction at the time point when the range of 0.5 dl/g to 0.6 dl/g inclusive in inherent viscosity is reached, and to subject to the chipped polyethylene terephthalate composition to solid phase polymerization for 8 hours or longer under the conditions that the solid phase polymerization temperature is greater than or equal to 210°C and less than or equal to 230°C and the degree of vacuum is less than or equal to 0.3 Torr.

Hereinafter, a specific production method for the polyethylene terephthalate composition of the present invention will be described, but the invention is not limited to this.

After a low polymer of ethylene terephthalate is melted in an esterification reaction tank, a slurry of terephthalic acid and ethylene glycol (the molar ratio of ethylene glycol/terephthalic acid is 1.15) is added over 3.5 hours to conduct an esterification reaction while distilling water. At this time, the amount of by-produced diethylene glycol has a correlation with the amount of ethylene glycol relative to terephthalic acid; that is, if the amount of ethylene glycol is increased, the amount of by-produced diethylene glycol also increases. After the esterification reaction ends, the process is switched to a polymerization reaction tank, where manganese acetate 4-hydrate ethylene glycol solution (5 wt%) as a promoter is added so as to achieve 0.07 part by weight in terms of manganese acetate 4-hydrate (which corresponds to 2.8 mol/ton in terms of manganese element) and antimony trioxide as a polycondensation catalyst is added so as to achieve 0.03 part by weight, relative to 100 parts by weight of the polyethylene terephthalate composition. Herein, if ethylene glycol is added in an amount greater than or equal to 0.1 molar time and less than or equal to 0.5 molar time the terephthalic acid, the esterification of unreacted carboxylic acid terminal groups proceeds more efficiently due to the promoter, so that the hydrolysis resistance can be improved. As for the added amount of the promoter, if the promoter is added so that the ratio (M/P) between the sum (M) of the total molar amount of manganese element, calcium element and magnesium element, which are metal components contained in the promoter, and 0.5 time the molar amount of the alkali metal element or elements contained in the alkali metal phosphate compound and the molar amount (P) of phosphorus element is greater than or equal to 1.00 and less than 1.20, the hydrolysis resistance improves.

After 5-minute stirring, an ethylene glycol solution of an alkali metal phosphate compound (30 mmol/liter) and phosphoric acid are added so that the metal phosphate compound is in an amount greater than or equal to 1.0 mol/ton and less than or equal to 3.0 mol/ton in terms of alkali metal elements and the phosphorus element contained in the polyethylene terephthalate composition is in an amount greater than or equal to 1.5 mol/ton and less than or equal to 5.0 mol/ton, relative to 100 parts by weight of the polyethylene terephthalate composition, while stirring is being performed at a peripheral speed of 15 m/s. At this time, in order to cause the amount of the white extraneous matter to be less than or equal to 1 ppm in volume fraction relative to the polyethylene terephthalate composition, it is necessary that the ethylene glycol solution of the alkali metal phosphate compound be greater than or equal to 2.0 mol/liter and less than or equal to 30 mmol/liter, and particularly, it is preferable to add the ethylene glycol solution while stirring is being performed at a peripheral speed greater than or equal to 3.0 m/s and less than or equal to 30 m/s. Furthermore, in order to cause the post-moist heat treatment increase in the amount of carboxylic acid terminal groups to be less than or equal to 30 eq/ton, it is necessary that the alkali metal phosphate compound content relative to the polyethylene terephthalate composition be greater than or equal to 1.0 mol/ton and less than or equal to 3.0 mol/ton.

The polycondensation reaction is performed with the final reached temperature being 280°C and the degree of vacuum being 0.1 Torr. At the time point when a melt viscosity that corresponds to an inherent viscosity of 0.55 is reached, the reaction product is discharged and is chipped into chips by a strand cutter. The diethylene glycol content at this time has a correlation with the inherent viscosity at the time of the chipping; that is, there is a tendency that if the inherent viscosity is made higher, the polycondensation reaction time will become longer and the by-produced diethylene glycol will increase in amount. Furthermore, the amount of carboxylic acid terminal groups has a correlation with each of the final reached temperature and the inherent viscosity. In order to reduce the amount of carboxylic acid terminal groups, it is effective to lower the final reached temperature and achieve a state where the inherent viscosity is also low before performing the chipping.

By solid phase polymerization of the obtained chips at a solid phase polymerization temperature of 230°C and a degree of vacuum of 0.3 Torr for 11 hours, the polyethylene terephthalate composition of the present invention can be obtained.

The polyethylene terephthalate composition obtained in this manner, after being dried, can be extruded and biaxially stretched by an ordinary extruder and T-die, so that the polyethylene terephthalate composition is not only favorable in hydrolysis resistance and optical characteristics that are required of front sheets for solar cells, but also high in inherent viscosity and excellent in hydrolysis resistance. Therefore, compared with the related-art films, the polyethylene terephthalate composition can be made into thinner films, and therefore is advantageous in the size reduction and weight reduction of solar cell modules.

**Examples**

(A. Inherent viscosity: IV)

0.1 g of a polymer was dissolved in 10 ml of o-chlorophenol at 160°C for 20 minutes, and was subjected to measurement at 25°C.

(B. Quantification of amount of phosphorus and amount of manganese in polymer)

A fluorescence X-ray analyzer (model number: 3270) by Rigaku Corporation was used for the measurement.

(C. Quantification of amount of alkali metal in polymer)

The quantification was carried out by atomic absorption spectrometry (by Hitachi, Polarized-radiation Zeeman Atomic Absorptiometer 180-80, with acetylene/air flame).

(D. Amount of carboxylic acid terminal groups)

Chips of the polyethylene terephthalate composition were collected and measurement was carried out by a method according to Maulice, et al. 2 g of the polymer chips were dissolved in 50 ml o-cresol/chloroform (weight ratio of 7/3), and a supernatant fluid after centrifugal sedimentation was collected. The supernatant fluid was titrated with an N/20-NaOH methanol solution, and the amount of carboxylic acid terminal groups was indicated by equivalent/1 t of polyester.
(Document: M. J. Maulice, F. Huizinga. Anal. Chim. Acta, 22 p.363 (1960)).

(E. Measurement method for diethylene glycol)

0.5 g of the polymer chips were subjected to amine decomposition in monoethanol amine, and free diethylene glycol was measured by gas chromatography (GC-14A by Shimadzu Corporation). Incidentally, the numerical values indicate wt% of diethylene glycol in the polymer.

(F. Quantification of white extraneous matter in polymer)

5 g of strands or chips of a pre-solid phase polymerization polymer were metered onto a black mount sheet, and the white extraneous matters were marked by using a round type illuminated magnifying glass (ENV-B Type) by Otsuka Optics Co., Ltd. The marked white extraneous matters ware observed under a scanning type electron microscope (SEM by Hitachi High-Technologies). With respect to white extraneous matters whose maximum diameters were greater than or equal to 50 $\mu$m, elementary analysis was performed by using an SEM-energy dispersive X-ray spectroscopy (EDX: EMAX-7000 type by HORIBA, Ltd.). With respect to the white extraneous matters from which phosphorus element and alkali metal elements were detected, the number thereof was counted, and the white extraneous matter volume was calculated from the maximum diameter by a conversion formula below, and the volume fraction of the total volume of the white extraneous matters relative to the polyethylene terephthalate composition was calculated.

$$\text{White extraneous matter volume} = (4 \times \pi \times (\text{maximum diameter}/2)^3)/3$$

Note that the specific gravity of the polyethylene terephthalate composition was determined as 1.35 g/cm$^3$.

(G. Increase in the amount of carboxylic acid terminal groups: ΔCOOH)

Chips of the polyethylene terephthalate composition were treated in water vapor at 155°C for 4 hours.

Measurement apparatus: PRESSURE COOKER 305SIII (by HIRAYAMA MANUFACTURING CORPORATION)

The increase in the amount of carboxylic acid terminal groups (ΔCOOH) was calculated by measuring the amounts of carboxylic acid terminal groups of each sample before and after the treatment.
Samples whose ΔCOOH was less than or equal to 30 eq/ton were determined as pass.

(H. Measurement of fisheyes)

Using a polarization plate, fisheyes per the A4 size area on a biaxially stretched film (50 μm thick) of the polyethylene terephthalate composition were marked by visual inspection, and the presence/absence of phosphorus element and any alkali metal element was checked by SEM-EDX. Films in which the number of fisheyes containing phosphorus element and any alkali metal element was 0 pieces/A4 were determined as pass.

(I. Elongation retention ratio)

Using a biaxial stretched film and using a highly accelerated life test apparatus PC-305SIII by HIRAYAMA MANUFACTURING CORPORATION, a moist heat treatment was carried out at 121°C and 100% RH, the time consumed for the elongation retention ratio of the post-treatment to pre-treatment sample to become 50% was determined as an elongation half-life.
The film elongation was measured under the following conditions, by using an Instron type tensile tester according to a method prescribed in ASTM D882-12.

- Measurement apparatus: a film strength/elongation measurement apparatus by ORIENTEC Co., LTD. "Tensilon AMF/RTA-100"
- Specimen size: 10 mm in width x 100 mm in length
- Tension speed: 200 mm/minute
- Measurement environment: temperature of 23°C, humidity of 65% RH

Elongation half-lives greater than or equal to 75 hours considered to be applicable in solar cell uses were determined as pass.

(J. Cyclic trimer content)

20 mg of chips prior to extrusion forming are dissolved in OCP at 150°C for 30 minutes, and then cooled at room temperature. Then, after addition of 1,4-diphenyl benzene as an internal standard, 2 ml of methanol is added, and the polymer is separated by a high-speed centrifugal separator, and a liquid layer portion is measured.

Apparatus: LC-10ADvp by Shimadzu Corporation
Column: YMC-Pack ODS-2 150 mm x 4.6 mm
Column temperature: 40°C
Flow: 1.3 ml/min
Injection rate: 10 μm
Detector: UV 240 nm
Eluents: A liquid (pure water):B liquid (methanol) = 25:75.

(K. Deposition amount of cyclic trimers)

After a biaxial stretched polyester film was left standing still in an oven at 150°C for 30 minutes, a film surface was enclosed with a frame so that the enclosed area was 72 cm$^2$. Then, the film surface within the frame was washed with 10 ml of ethanol, and the solution was all collected. The absorbance at 365 nm of the collected solution was measured by using a spectrophotometer U3010 by Hitachi, Ltd. The deposition amount of cyclic trimers was found by comparison with a standard ethanol solution of cyclic trimers.

The deposition amounts of cyclic trimers that were less than 0.5 mg/m$^2$ were determined as pass.

(Reference example 1) Preparation Method for Sodium Dihydrogen Phosphate Ethylene Glycol Solution

A sodium dihydrogen phosphate dihydrate ethylene glycol dissolution at a concentration of 400 mmol/L was prepared by adding 4000 mmol of sodium dihydrogen phosphate dihydrate to 10 L of ethylene glycol heated to 60°C while performing the stirring. The prepared solution was used after being diluted to a predetermined concentration in each example.

(Example 1)

A slurry made up of 86 parts by weight of terephthalic acid and 37 parts by weight of ethylene glycol was supplied into an esterification reaction apparatus (ES can) loaded beforehand with 114 parts by weight of bis-hydroxy ethylene terephthalate (corresponding to 100 parts by weight of polyethylene terephthalate (PET)), by a snake pump over 3.5 hours, and an esterification reaction was conducted while the temperature of reactants was being controlled to 245°C to 255°C.

After the esterification reaction ended, 114 parts by weight of the obtained bis-hydroxy ethylene terephthalate (corresponding to 100 parts by weight of PET) was moved into a polymerization can, and 0.07 parts by weight of manganese acetate 4-hydrate (a 5% ethylene glycol solution, corresponding to 2.8 mol/ton in terms of manganese element) and 0.03 part by weight of antimony trioxide were added. After that, 0.019 parts by weight of phosphoric acid (corresponding to 1.9 mol/ton) and 0.027 parts by weight of sodium dihydrogen phosphate dihydrate (corresponding to 1.7 mol/ton) were each added in the form of a 25 mmol/L ethylene glycol solution while stirring was being performed at a peripheral speed of 4 m/s. Depressurization was performed while the temperature was raised from 255°C to 280°C, and polycondensation reaction was conducted with the final reached temperature being 280°C and the degree of vacuum being 0.1 Torr. The obtained polyethylene terephthalate composition had an inherent viscosity of 0.55 dl/g, 0.8 wt% of diethylene glycol, a phosphorus element content of 3.1 mol/ton, a sodium metal content of 1.7 mol/ton, 19 eq/ton of carboxylic acid terminal groups, a white extraneous matter content of 0 ppm (5 g of the obtained polymer chips was observed with a magnifying glass (ENV-B by Otsuka Optics Co., Ltd.), and no white extraneous matter was detected), which were within the scope of the present invention. In this occasion, the phosphorus element content decreased relative to the added amount because phosphorus compounds flew out together with ethylene glycol from the system during the polycondensation reaction.

After the obtained polyethylene terephthalate composition was dried and crystallized at 150°C for 4 hours, solid phase polymerization was performed at a chip temperature of 230°C and a degree of vacuum less than or equal to 0.3 Torr for 11 hours, so that a polyethylene terephthalate composition having an inherent viscosity of 0.80 dl/g, 11 eq/ton of carboxylic acid terminal groups and a ΔCOOH of 25 eq/t was obtained. The obtained polyethylene terephthalate composition was supplied into an extruder in a nitrogen atmosphere, and was caused to pass through a filter of 400 mesh at an extrusion temperature of 280°C. After being extruded from the T die, the composition was rapidly cooled on a casting drum (20°C) and was formed into a sheet by a static electricity application method, and then was longitudinally stretched at a longitudinal stretching temperature of 90°C and a longitudinal stretching factor of 3.8 times, and then laterally stretched at a lateral stretching temperature of 110°C and a lateral stretching factor of 3.8 times. Then, a heat treatment was performed at 200°C for 3 seconds, so that a biaxially stretched film having an area factor of 13.2 times in effective factor was obtained. Results are shown in Table 1 and Table 2. As for the obtained biaxially stretched film, fisheyes resulting from the white extraneous matter existed at a rate of 0 pieces/A4, which was at a level that would not cause any problem in the application to solar cell front sheet uses or the like.

(Example 2)

A polyethylene terephthalate composition and a biaxially stretched film were obtained in substantially the same manner as in Example 1, except that after manganese acetate 4-hydrate was added, 11 parts by weight of ethylene glycol (corresponding to 0.35 molar time the terephthalic acid component) was added. Results are shown in Table 1 and Table 2.

As a result of adding ethylene glycol, the obtained polyethylene terephthalate composition had 9 eq/ton of carboxylic acid terminal groups and a ΔCOOH of 20 eq/ton, indicating an improvement in hydrolysis resistance over Example 1. The biaxially stretched film was also at a level that would not cause any problem in the application to solar cell front sheet uses and the like.

(Examples 3 to 5 and 20 and Comparative examples 1 to 3 and 7)

Polyethylene terephthalate compositions and biaxially stretched films were film-formed in substantially the same manner as in Reference example 1 and Example 1, except that the kind of alkali metal phosphate compound and the added amount thereof, the peripheral speed, the concentration of the alkali metal phosphate compound ethylene glycol solution, and the inherent viscosity were changed. Results are shown in Table 1 and Table 2.

In Example 3, potassium dihydrogen phosphate anhydride was used instead of sodium dihydrogen phosphate dehydrate, so that the amount of white extraneous matters was 0.15 ppm, showing a tendency of increase. However, this was within the scope of the present invention, and was at a level that would not cause any problem in the application to solar cell front sheet uses and the like.

In Example 4, the peripheral speed was changed to 2 m/s, so that the amount of the white extraneous matter was 0.15 ppm, showing a tendency of increase. However, this was within the scope of the present invention, and was at a level that would not cause any problem in the application to solar cell front sheet uses and the like.

In Example 5, the concentration of the sodium dihydrogen phosphate dihydrate ethylene glycol solution was changed to 30 mmol/L, so that the amount of the white extraneous matter was 0.5 ppm, showing a tendency of increase. However, this was within the scope of the present invention, and was at a level that would not cause any problem in the application to solar cell front sheet uses and the like.

In Example 20, lithium dihydrogen phosphate anhydride was used instead of sodium dihydrogen phosphate dihydrate, so that the amount of COOH terminal groups was 15 eq/ton, showing a tendency of increasing, and the elongation half-life as 76 hours, showing a tendency of decrease. However, these were within the scope of the present invention, and were at levels that would not cause any problem in the application to solar cell front sheet uses and the like.

In Comparative example 1, the inherent viscosity of the polyethylene terephthalate composition was changed to 0.63 dl/g. Since the inherent viscosity was below the lower limit in the scope of the present invention, the elongation half-life declined, and the hydrolysis resistance was insufficient.

In Comparative example 2, the inherent viscosity of the polyethylene terephthalate composition was changed to 0.95 dl/g. Since the inherent viscosity was above the upper limit in the present invention, the elongation half-life declined, and the hydrolysis resistance was insufficient. It is presumed that this occurred because the inherent viscosity (molecular weight) became large and therefore the orientation of the film declined.

In Comparative example 3, the polyethylene terephthalate composition was obtained in substantially the same manner as in Example 1, except that an alkali metal phosphate compound was not added. The obtained polyethylene terephthalate composition had a ΔCOOH of 41 eq/ton, and was outside the scope of the present invention and insufficient in hydrolysis resistance.

In Comparative example 7, the concentration of the sodium dihydrogen phosphate dihydrate ethylene glycol solution was changed to 35 mmol/L, so that the white extraneous matter was 1.4 ppm, which was outside the scope of the present invention, and fisheyes of the biaxially stretched film were detected at a rate of 4 pieces/A4, making the film insufficient in optical characteristics.

(Example 6)

A polyethylene terephthalate composition and a biaxially stretched film were obtained in substantially the same manner as in Example 2, except that the concentration of the sodium dihydrogen phosphate dihydrate ethylene glycol solution was set to 5 mmol/L, and that the addition method for the sodium dihydrogen phosphate dihydrate ethylene glycol solution was changed to a method in which the sodium dihydrogen phosphate dihydrate ethylene glycol solution was added in the form of a mixed slurry with terephthalic acid over 3.5 hours during the esterification reaction while stirring was being performed at a peripheral speed of 25 m/s. Results are shown in Table 1 and Table 2.

As for the obtained polyethylene terephthalate composition, the ΔCOOH was 20 eq/ton and the white extraneous matter was in an amount of 0 ppm, which were within the scope of the present invention, and at levels that would not cause any problem in the application to solar cell front sheet uses and the like.

(Example 7)

Sodium dihydrogen phosphate dihydrate ethylene glycol solutions were prepared at two different concentrations of 2.5 mmol/L and 12.5 mmol/L. The 2.5 mmol/L solution was added as a mixed slurry with terephthalic acid over 3.5 hours while stirring was being performed at a peripheral speed of 25 m/s. On the other hand, the 12.5 mmol/L solution was added in substantially the same manner as in Example 2 after 114 parts by weight of bis-hydroxy ethylene terephthalate (corresponding to 100 parts by weight of PET) was moved into a polymerization can. In this manner, an ethylene terephthalate composition was obtained. Results are shown in Table 1 and Table 2.

As for the obtained ethylene terephthalate composition, the ΔCOOH was 20 eq/ton and the white extraneous matter was 0 ppm, which were within the scope of the present invention, and at levels that would not cause any problem in the application to solar cell front sheet uses and the like.

(Examples 8 to 16 and 19 and Comparative examples 4, 6, 8 and 9)

Polyethylene terephthalate compositions and biaxially stretched films were obtained in substantially the same manner as in Example 2, except that the added amount of the alkali metal phosphate compound and the addition method thereof, the added amount of phosphoric acid, the added amount of manganese acetate as a promoter, and the inherent viscosity were changed. Results are shown in Table 1 and Table 2.

In Example 8, as a result of changing the added amount of phosphoric acid, the molar ratio of phosphoric acid/sodium dihydrogen phosphate dihydrate reduced to 0.76 and M/P increased to 1.43, so that the ΔCOOH was 27 eq/ton, showing a tendency of the hydrolysis resistance declining in comparison with Example 2; however, this was within the scope of the present invention, and was at a level that would not cause any problem in the application to solar cell front sheet uses and the like.

In Example 9, as a result of changing the added amount of phosphoric acid, the molar ratio of phosphoric acid/sodium dihydrogen phosphate dihydrate increased to 1.47, so that the ΔCOOH was 27 eq/ton, showing a tendency of the hydrolysis resistance declining in comparison with Example 2; however, this was within the scope of the present invention, and was at a level that would not cause any problem in the application to solar cell front sheet uses and the like.

In Example 10, as a result of changing the added amount of sodium dihydrogen phosphate dihydrate, the molar ratio of phosphoric acid/sodium dihydrogen phosphate dihydrate and M/P increased to 1.90 and 1.34, respectively, so that ΔCOOH was 26 eq/ton, showing a tendency of the hydrolysis resistance declining in comparison with Example 2; however, this was within the scope of the present invention, and at a level that would not cause any problem in the application to solar cell front sheet uses and the like.

In Example 11, as a result of changing the added amount of sodium dihydrogen phosphate dihydrate to 2.8 mol/ton, which is close to the upper limit in the present invention, the molar ratio of phosphoric acid/sodium dihydrogen phosphate dihydrate reduced to 0.68, so that the ΔCOOH was 26 eq/ton, showing a tendency of the hydrolysis resistance declining in comparison with Example 2. Furthermore, since the added amount of sodium dihydrogen phosphate dihydrate was close to the upper limit in the present invention, there was a tendency of the white extraneous matter increasing to 0.1 ppm. However, these were within the scope of the present invention, and at levels that would not cause any problem in the application to solar cell front sheet uses and the like.

Furthermore, since the added amount of sodium dihydrogen phosphate dihydrate was a value close to the upper limit value in the present invention, the added amount thereof as the ethylene glycol solution increased, so that there was also a tendency of increase of diethylene glycol.

In Example 12, because of changing the added amounts of sodium dihydrogen phosphate dihydrate, phosphoric acid and manganese acetate 4-hydrate, the amount of phosphorus element was 1.7 mol/ton, close to the lower limit in the present invention, so that the ΔCOOH was 26 eq/ton, showing a tendency of the hydrolysis resistance declining in comparison with Example 2; however, this was within the scope of the present invention, and at a level that would not cause any problem in the application to solar cell front sheet uses and the like. Furthermore, in comparison with Example 10, the molar ratio of phosphoric acid/sodium dihydrogen phosphate and M/P were within a more preferred scope of the present invention, and therefore the elongation half-life improved.

In Example 13, as a result of adding sodium dihydrogen phosphate dihydrate in an amount of 2.8 mol/ton and phosphoric acid in an amount of 2.8 mol/ton, the phosphorus element content was 4.8 mol/ton, close to the upper limit in the present invention, and M/P was as low as 0.88, so that the ΔCOOH was 28 eq/ton, showing a tendency of increases, and so that the white extraneous matter was also detected as 0.1 ppm. However, these were within the scope of the present invention, and at levels that would not cause any problem in the application to solar cell front sheet uses and the like.

In Example 14, as a result of adding sodium dihydrogen phosphate dihydrate in an amount of 2.5 mol/ton, the ratio of phosphoric acid/alkali metal phosphate compound became 0.76, so that the ΔCOOH was 28 eq/ton, showing a tendency of increase, and so that the white extraneous matter was detected as 0.1 ppm. However, these were within the scope of the present invention, and at levels that would not cause any problem in the application to solar cell front sheet uses and the like.

In Example 15, because of changing the inherent viscosity to 0,72 dl/g, the time of solid phase polymerization became shorter, and the amount of carboxylic acid terminal groups was 13 eq/ton, showing a tendency of increasing in comparison with Example 2. However, these were within the scope of the present invention, and at levels that would not cause any problem in the application to solar cell front sheet uses and the like.

In Example 16, because of changing the inherent viscosity to 0.87 dl/g, the time of solid phase polymerization became longer, and the amount of carboxylic acid terminal groups was 8 eq/ton, showing a tendency of decrease. In the case where the polyethylene terephthalate composition was formed into a film, there was a tendency of decline of the elongation half-life; however, this was within the scope of the presnt invention, and at a level that would not cause any problem in the application to solar cell front sheet uses and the like. A reason for the decline of the elongation half-life is presumed to be that since the molecular weight became larger, the orientation of the film declined. In Example 19, because of changing the inherent viscosity to 0,67 dl/g, the time of solid phase polymerization became shorter, and the amount of carboxylic acid terminal groups was 15 eq/ton, showing a tendency of increasing in comparison with Example 2; however, these were within the scope of the present invention, and at levels that would not cause any problem in the application to solar cell front sheet uses and the like.

In Comparative example 4, as compared with Example 2, the added amount of phosphoric acid was changed, so that the amount of phosphorus element was 0.9 mol/ton, outside the scope of the invention, so that the $\Delta$COOH was 38 eq/ton and therefore the hydrolysis resistance was insufficient.

In Comparative example 6, the concentration of the sodium dihydrogen phosphate dihydrate ethylene glycol solution was 1.0 mmol/L when the solution was added, so that the $\Delta$COOH was 33 eq/ton and therefore the hydrolysis resistance was insufficient. This is presumed as follows: since the sodium dihydrogen phosphate dihydrate ethylene glycol solution was excessively weak, a large amount of ethylene glycol was introduced into the reaction system, so that diethylene glycol increased in amount and therefore the hydrolysis resistance declined. (0.5 wt% of diethylene glycol = corresponds to 1 mol% relative to the total glycol component)

In Comparative example 8, because the amount of sodium dihydrogen phosphate was 3.5 mol/ton, exceeding the upper limit in the present invention, the molar ratio of phosphoric acid/sodium dihydrogen phosphate dihydrate reduced to 0.54, and the elongation half-life was 65 hours, failing to reach the requirement, and the white extraneous matter was at 1.4 ppm, outside the scope of the present invention, and fisheyes of the biaxially stretched film were at a rate of 5 pieces/A4. Thus, both the hydrolysis resistance and the optical characteristics were insufficient.

In Comparative example 9, the amount of phosphorus was 5.7 mol/ton, exceeding the upper limit in the present invention, and the molar ratio of phosphoric acid/sodium dihydrogen phosphate dihydrate increased to 2.94, and M/P reduced to 0.64, so that the $\Delta$COOH was 42 eq/ton and therefore the hydrolysis resistance was insufficient.

(Comparative example 5)

The esterification reaction was conducted in substantially the same manner as in Example 6, except that the concentration of the sodium dihydrogen phosphate dihydrate ethylene glycol solution was set to 1 mmol/L. The concentration of the sodium dihydrogen phosphate dihydrate ethylene glycol solution was at or below the lower limit of the range of the present invention, so that the amount of ethylene glycol was 5.75 molar times in the ratio to the terephthalic acid, that is, in excess, and therefore control of the rectifying column temperature became impossible. Thus, a polyethylene terephthalate composition could not be obtained. Results are shown in Table 1 and Table 2.

(Example 17)

A polyethylene terephthalate composition was obtained in substantially the same manner as in Example 7, except that instead of phosphoric acid, ethyl diethyl phosphonoacetate was used. Results are shown in Table 1 and Table 2.

(Example 18)

A polyethylene terephthalate composition was obtained in substantially the same manner as in Example 1, except that silica particle ("Sylysia" (registered trademark) 350, Fuji Silysia Chemical Ltd.) was added as a 5 wt% ethylene glycol slurry so as to be contained in an amount of 0.16 wt% relative to the polyethylene terephthalate composition. Results are shown in Table 1 and Table 2.

(Comparative example 10)

A polyethylene terephthalate composition having an inherent viscosity of 0.8 dl/g was obtained in substantially the same manner as in Example 1, except that solid phase polymerization was not carried out. Results are shown in Table 1 and Table 2.

(Example 21)

In Example 21, a polyethylene terephthalate composition was obtained in substantially the same manner as in Example 2, except that melt polymerization was conducted up to an inherent viscosity of 0.7 dl/g, and after the polymer was formed into chipped, an inherent viscosity of 0.88 dl/g was achieved by solid phase polymerization. As for the obtained polyethylene terephthalate composition, in comparison with Example 2, the inherent viscosity at the time of end of the melt polymerization reaction was higher, and the reaction time was longer, so that the amount of diethylene glycol was 1.2 wt%, showing a tendency of increase. Results are shown in Table 1 and Table 2.

[Table 1]

| | Alkali metal phosphate | | | | | EG addition | Promoter | | Alkali metal | | Phosphorus compound | Phosphorus | Phosphorous compound / alkali phosphate ratio | M/P |
|---|---|---|---|---|---|---|---|---|---|---|---|---|---|---|
| | Compound | Amount added | EG solution concentration | Addition timing | Peripheral speed | | Metal species | Mol /t | Metal species | Mol / ton | mol/ton | mol/ton | | |
| | | Mol / ton | mmol/L | | m/s | | | | | | | | | |
| Example 1 | Sodium di-hydrogen phosphate dihydrate | 1.7 | 25 | Polymerization can | 4 | Without | Mn | 2.8 | Na | 1.7 | 1.9 | 3.1 | 1.12 | 1.19 |
| Example 2 | Sodium dihydrogen phosphate dihydrate | 1.7 | 25 | Polymerization can | 4 | With | Mn | 2.8 | Na | 1.7 | 1.9 | 3.1 | 1.12 | 1.19 |
| Example 3 | Potassium dihydrogen phosphate | 1.7 | 25 | Polymerization can | 4 | Without | Mn | 2.8 | K | 1.7 | 1.9 | 3.1 | 1.12 | 1.19 |
| Example 4 | Sodium dihydrogen phosphate dihydrate | 1.7 | 25 | Polymerization can | 2 | Without | Mn | 2.8 | Na | 1.7 | 1.9 | 3.1 | 1.12 | 1.19 |
| Example 5 | Sodium dihydrogen phosphate dihydrate | 1.7 | 30 | Polymerization can | 4 | Without | Mn | 2.8 | Na | 1.7 | 1.9 | 3.1 | 1.12 | 1.19 |
| Example 6 | Sodium dihydrogen phosphate dihydrate | 1.7 | 5 | ES can | 25 | With | Mn | 2.8 | Na | 1.7 | 1.9 | 3.1 | 1.12 | 1.19 |
| Example 7 | Sodium dihydrogen phosphate dihydrate | 0.85 | 2.5 | ES can | 25 | With | Mn | 2.8 | Na | 1.7 | 1.9 | 3.1 | 1.12 | 1.19 |
| | | 0.85 | 12.5 | Polymerization can | 4 | | | | | | | | | |

13

[Table 1]

| | Alkali metal phosphate | | | | | EG addition | Promoter | | Alkali metal | | Phosphorus compound | Phosphorus | Phosphorous compound / alkali phosphate ratio | M/P |
|---|---|---|---|---|---|---|---|---|---|---|---|---|---|---|
| | Compound | Amount added | EG solution concentration | Addition timing | Peripheral speed | | | | | | | | | |
| | | Mol / ton | mmol/L | | m/s | | Metal species | Mol /t | Metal species | Mol / ton | mol/ton | mol/ton | | |
| Example 8 | Sodium di-hydrogen phosphate dihydrate | 1.7 | 25 | Polymerization can | 4 | With | Mn | 2.8 | Na | 1.7 | 1.3 | 2.6 | 0.76 | 1.43 |
| Example 9 | Sodium dihydrogen phosphate dihydrate | 1.7 | 25 | Polymerization can | 4 | With | Mn | 2.8 | Na | 1.7 | 2.5 | 3.6 | 1.47 | 1.02 |
| Example 10 | Sodium di-hydrogen phosphate dihydrate | 1 | 25 | Polymerization can | 4 | With | Mn | 2.8 | Na | 1 | 1.9 | 2.5 | 1.90 | 1.34 |
| Example 11 | Sodium di-hydrogen phosphate dihydrate | 2.8 | 25 | Polymerization can | 4 | With | Mn | 2.8 | Na | 2.8 | 1.9 | 4.0 | 0.68 | 1.05 |
| Example 12 | Sodium dihydrogen phosphate dihydrate | 1 | 25 | Polymerization can | 4 | With | Mn | 1.4 | Na | 1 | 1 | 1.7 | 1.00 | 1.12 |
| Example 13 | Sodium dihydrogen phosphate dihydrate | 2.8 | 25 | Polymerization can | 4 | With | Mn | 2.8 | Na | 2.8 | 2.8 | 4.8 | 1.00 | 0.88 |

EP 2 899 229 B1

14

[Table 1]

| | Alkali metal phosphate | | | | | EG addition | Promoter | | Alkali metal | | Phosphorus compound | Phosphorus | Phosphorous compound / alkali phosphate ratio | M/P |
|---|---|---|---|---|---|---|---|---|---|---|---|---|---|---|
| | Compound | Amount added | EG solution concentration | Addition timing | Peripheral speed | | Metal species | Mol /t | Metal species | Mol / ton | mol/ton | mol/ton | | |
| | | Mol / ton | mmol/L | | m/s | | | | | | | | | |
| Example 14 | Sodium di-hydrogen phosphate dihydrate | 2.5 | 25 | Polymerization can | 4 | With | Mn | 2.8 | Na | 2.5 | 1.9 | 3.7 | 0.76 | 1.08 |
| Example 15 | Sodium dihydrogen phosphate dihydrate | 1.7 | 25 | Polymerization can | 4 | With | Mn | 2.8 | Na | 1.7 | 1.9 | 3.1 | 1.12 | 1.19 |
| Example 16 | Sodium dihydrogen phosphate dihydrate | 1.7 | 25 | Polymerization can | 4 | With | Mn | 2.8 | Na | 1.7 | 1.9 | 3.1 | 1.12 | 1.19 |
| Example 17 | Sodium dihydrogen phosphate dihydrate | 1.7 | 25 | Polymerization can | 4 | With | Mn | 2.8 | Na | 1.7 | 1.9 | 3.1 | 1.12 | 1.19 |
| Example 18 | Sodium dihydrogen phosphate dihydrate | 1.7 | 25 | Polymerization can | 4 | With | Mn | 2.8 | Na | 1.7 | 1.9 | 3.1 | 1.12 | 1.19 |
| Example 19 | Sodium dihydrogen phosphate dihydrate | 1.7 | 25 | Polymerization can | 4 | With | Mn | 2.8 | Na | 1.7 | 1.9 | 3.1 | 1.12 | 1.19 |
| Example 20 | Lithium dihydrogen phosphate | 1.7 | 25 | Polymerization can | 4 | Without | Mn | 2.8 | Li | 1.7 | 1.9 | 3.1 | 1.12 | 1.19 |

[Table 1]

| | Alkali metal phosphate | | | | | EG addition | Promoter | | Alkali metal | | Phosphorus compound | Phosphorus | Phosphorous compound / alkali phosphate ratio | M/P |
|---|---|---|---|---|---|---|---|---|---|---|---|---|---|---|
| | Compound | Amount added | EG solution concentration | Addition timing | Peripheral speed | | Metal species | Mol /t | Metal species | Mol / ton | mol/ton | mol/ton | | |
| | | Mol / ton | mmol/L | | m/s | | | | | | | | | |
| Example 21 | Sodium di-hydrogen phosphate dihydrate | 1.7 | 25 | Polymerization can | 4 | With | Mn | 2.8 | Na | 1.7 | 1.9 | 3.1 | 1.12 | 1.19 |
| Comparative example 1 | Sodium dihydrogen phosphate dihydrate | 1.7 | 25 | Polymerization can | 4 | Without | Mn | 2.8 | Na | 1.7 | 1.9 | 3.1 | 1.12 | 1.19 |
| Comparative example 2 | Sodium dihydrogen phosphate dihydrate | 1.7 | 25 | Polymerization can | 4 | Without | Mn | 2.8 | Na | 1.7 | 1.9 | 3.1 | 1.12 | 1.19 |
| Comparative example 3 | None | - | - | - | - | Without | Mn | 2.8 | Na | 0 | 1.9 | 1.6 | - | 1.73 |
| Comparative example 4 | Sodium dihydrogen phosphate dihydrate | 1.7 | 25 | Polymerization can | 4 | With | Mn | 1.4 | Na | 1 | 0 | 0.9 | - | 2.24 |
| Comparative example 5 | Sodium dihydrogen phosphate dihydrate | 1.7 | 1 | ES can | 15 | - | - | - | Na | 1.7 | - | - | - | - |
| Comparative example 6 | Sodium dihydrogen phosphate dihydrate | 1.7 | 1 | Polymerization can | 4 | With | Mn | 2.8 | Na | 1.7 | 1.9 | 3.1 | 1.12 | 1.19 |

(continued)

[Table 1]

| | Alkali metal phosphate | | | | | EG addition | Promoter | | Alkali metal | | Phosphorus compound | Phosphorus | Phosphorous compound / alkali phosphate ratio | M/P |
|---|---|---|---|---|---|---|---|---|---|---|---|---|---|---|
| | Compound | Amount added | EG solution concentration | Addition timing | Peripheral speed | | | | | | | | | |
| | | Mol / ton | mmol/L | | m/s | | Metal species | Mol /t | Metal species | Mol / ton | mol/ton | mol/ton | | |
| Comparative example 7 | Sodium dihydrogen phosphate dihydrate | 1.7 | 35 | Polymerization can | 4 | Without | Mn | 2.8 | Na | 1.7 | 1.9 | 3.1 | 1.12 | 1.19 |
| Comparative example 8 | Sodium dihydrogen phosphate dihydrate | 3.5 | 25 | Polymerization can | 4 | With | Mn | 2.8 | Na | 3.5 | 1.9 | 4.6 | 0.54 | 0.99 |
| Comparative example 9 | Sodium dihydrogen phosphate dihydrate | 1.7 | 25 | Polymerization can | 4 | With | Mn | 2.8 | Na | 1.7 | 5 | 5.7 | 2.94 | 0.64 |
| Comparative example 10 | Sodium dihydrogen phosphate dihydrate | 1.7 | 25 | Polymerization can | 4 | Without | Mn | 2.8 | Na | 1.7 | 1.9 | 3.1 | 1.12 | 1.19 |

*EG: ethylene glycol
*M: sum of the molar amount of promoter metal element and 0.5 molar time the molar amount of alkali metal element
*P: molar amount of phosphorus element
*Mn: manganese
*Na: sodium
*K: potassium
*phosphorus compound: phosphorus compounds other than the alkali metal phosphate

17

[Table 2]

| | Polymer phsycal properties | | | | Cyclic trimer | | White extraneous matter | | Fisheye | Elongation half-life |
|---|---|---|---|---|---|---|---|---|---|---|
| | IV | DEG | COOH | $\Delta$COOH | Content | Amount of deposition | | | | |
| | dl/g | wt% | eq/ton | eq/ton | wt% | mg/m$^2$ | Pieces/5g | ppm | Pieces/A4 | hr |
| Example 1 | 0.8 | 0.8 | 11 | 25 | 0.45 | 0.1 | 0 | 0 | 0 | 80 |
| Example 2 | 0.8 | 0.83 | 9 | 20 | 0.45 | 0.1 | 0 | 0 | 0 | 83 |
| Example 3 | 0.8 | 0.83 | 11 | 26 | 0.45 | 0.1 | 1 | 0.15 | 0 | 80 |
| Example 4 | 0.8 | 0.85 | 12 | 26 | 0.45 | 0.1 | 1 | 0.15 | 0 | 80 |
| Example 5 | 0.8 | 0.83 | 11 | 25 | 0.45 | 0.1 | 3 | 0.5 | 0 | 80 |
| Example 6 | 0.8 | 0.83 | 10 | 20 | 0.45 | 0.1 | 0 | 0 | 0 | 83 |
| Example 7 | 0.8 | 0.83 | 10 | 20 | 0.45 / 0.45 | 0.1 / 0.1 | 0 | 0 | 0 | 83 |
| Example 8 | 0.8 | 0.83 | 12 | 27 | 0.45 | 0.1 | 0 | 0 | 0 | 78 |
| Example 9 | 0.8 | 0.83 | 10 | 27 | 0.45 | 0.1 | 0 | 0 | 0 | 78 |
| Example 10 | 0.8 | 0.83 | 10 | 26 | 0.45 | 0.1 | 0 | 0 | 0 | 78 |
| Example 11 | 0.8 | 0.86 | 12 | 26 | 0.45 | 0.1 | 1 | 0.1 | 0 | 81 |
| Example 12 | 0.8 | 0.83 | 10 | 26 | 0.45 | 0.1 | 0 | 0 | 0 | 81 |
| Example 13 | 0.8 | 0.83 | 10 | 28 | 0.45 | 0.1 | 1 | 0.1 | 0 | 78 |
| Example 14 | 0.8 | 0.83 | 10 | 28 | 0.45 | 0.1 | 1 | 0.1 | 0 | 79 |
| Example 15 | 0.72 | 0.83 | 13 | 26 | 0.48 | 0.1 | 0 | 0 | 0 | 77 |
| Example 16 | 0.87 | 0.83 | 8 | 19 | 0.43 | 0.1 | 0 | 0 | 0 | 80 |
| Example 17 | 0.8 | 0.83 | 9 | 20 | 0.45 | 0.1 | 0 | 0 | 0 | 82 |
| Example 18 | 0.8 | 0.83 | 10 | 22 | 0.45 | 0.1 | 0 | 0 | 0 | 82 |
| Example 19 | 0.67 | 0.83 | 15 | 29 | 0.56 | 0.2 | 0 | 0 | 0 | 75 |
| Example 20 | 0.8 | 0.86 | 15 | 28 | 0.45 | 0.1 | 0 | 0 | 0 | 76 |
| Example 21 | 0.88 | 1.2 | 15 | 29 | 0.55 | 0.2 | 0 | 0 | 0 | 75 |
| Comparative example 1 | 0.63 | 0.83 | 17 | 33 | 0.63 | 0.7 | 0 | 0 | 0 | 65 |

EP 2 899 229 B1

18

(continued)

| | Polymer phsycal properties | | | | Cyclic trimer | | White extraneous matter | | Fisheye | Elongation half-life |
|---|---|---|---|---|---|---|---|---|---|---|
| | IV | DEG | COOH | ΔCOOH | Content | Amount of deposition | | | | |
| | dl/g | wt% | eq/ton | eq/ton | wt% | mg/m$^2$ | Pieces/5g | ppm | Pieces/A4 | hr |
| Comparative example 2 | 0.95 | 0.83 | 8 | 20 | 0.42 | 0.1 | 0 | 0 | 0 | 70 |
| Comparative example 3 | 0.8 | 0.75 | 12 | 41 | 0.45 | 0.1 | 0 | 0 | 0 | 55 |
| Comparative example 4 | 0.8 | 0.83 | 9 | 38 | 0.45 | 0.1 | 0 | 0 | 0 | 60 |
| Comparative example 5 | - | - | - | - | - | - | - | - | - | - |
| Comparative example 6 | 0.8 | 1.5 | 11 | 33 | 0.45 | 0.1 | 0 | 0 | 0 | 78 |
| Comparative example 7 | 0.8 | 0.8 | 9 | 40 | 0.45 | 0.1 | 10 | 1.3 | 4 | 80 |
| Comparative example 8 | 0.8 | 0.86 | 9 | 26 | 0.45 | 0.1 | 10 | 1.4 | 5 | 65 |
| Comparative example 9 | 0.8 | 0.83 | 10 | 42 | 0.45 | 0.1 | 0 | 0 | 0 | 55 |
| Comparative example 10 | 0.8 | 1.3 | 30 | 60 | 1 | 2.1 | 0 | 0 | 0 | 60 |

*IV: intrinsic viscosity
*DEG: diethylene glycol
*COOH: amount of carboxylic acid end groups

EP 2 899 229 B1

Industrial Applicability

The present invention provides a polyethylene terephthalate composition excellent in long-period hydrolysis resistance and optical characteristics. Therefore, by forming the composition of the present invention into a biaxially stretched film, the composition of the invention can be effectively utilized in production of products, including magnetic material uses, electrical material uses such as capacitors, package uses, and optical uses, and particularly in the field of production of solar cell modules that employ solar cell front sheets that require long-period hydrolysis resistance, optical characteristics, and low-oligomer property.

**Claims**

1. A polyethylene terephthalate composition which contains an alkali metal phosphate compound in an amount greater than or equal to 1.0 mol/ton and less than or equal to 3.0 mol/ton in terms of an alkali metal element, and contains a phosphorus element in an amount greater than or equal to 1.5 mol/ton and less than or equal to 5.0 mol/ton, wherein a white extraneous matter containing a phosphorus element and an alkali metal element and being greater than or equal to 50 $\mu$m is in an amount less than or equal to 1 ppm in volume fraction, an inherent viscosity is greater than or equal to 0.65 dl/g and less than 0.90 dl/g, a content of a cyclic trimer is less than or equal to 0.6 wt%, an amount of carboxylic acid terminal groups is less than or equal to 15 eq/ton, and an increase in the amount of the carboxylic acid terminal groups ($\Delta$COOH) when a moist heat treatment (in a 155°C and 100% RH atmosphere, for 4 hours) is performed is less than or equal to 30 eq/ton, wherein the amount of phosphorus element, the amount of white extraneous matter containing a phosphorus element and an alkali metal element, the inherent viscosity, the content of a cyclic trimer and the increase in the amount of the carboxylic acid terminal group are measured by the methods described in the present specification.

2. The polyethylene terephthalate composition according to Claim 1 wherein the content of diethylene glycol is greater than or equal to 0.8 wt% and less than 1.5 wt%.

3. The polyethylene terephthalate composition according to Claim 2, wherein the content of diethylene glycol is greater than or equal to 0.8 wt% and less than 1.0 wt%.

4. A production method for a polyethylene terephthalate resin composition in which terephthalic acid and ethylene glycol are supplied to a low polymer of ethylene terephthalate, in which ethylene terephthalate units form a 15-or-less-mer, and a polycondensation reaction via an esterification reaction, and a solid phase polymerization are conducted, wherein during a period from prior to start of the esterification reaction to before the polycondensation reaction is started, an alkali metal phosphate compound in a form of a greater than or equal to 2.0 mmol/liter and less than or equal to 30 mmol/liter ethylene glycol solution is added so as to be in an amount greater than or equal to 1.0 mol/ton and less than or equal to 3.0 mol/ton in terms of alkali metal relative to the polyethylene terephthalate composition.

5. The production method for the polyethylene terephthalate composition according to Claim 4 **characterized in that** the ethylene glycol solution of the alkali metal phosphate compound is added as a mixture with terephthalic acid.

6. The production method for the polyethylene terephthalate composition according to Claim 4 or 5 **characterized in that** the ethylene glycol solution of the alkali metal phosphate compound is added to the low polymer of ethylene terephthalate that is being stirred at a peripheral speed greater than or equal to 3.0 m/s and less than or equal to 30 m/s.

7. The production method for the polyethylene terephthalate composition according to any one of Claims 4 to 6 wherein phosphoric acid is added in an amount greater than or equal to 0.8 time mol and less than or equal to 1.4 time mol relative to the alkali metal phosphate compound.

8. The production method for the polyethylene terephthalate composition according to any one of Claims 4 to 7 wherein addition is performed such that a molar ratio (M/P) between a sum (M) of a total molar amount of a manganese element, a calcium element and a magnesium element added as promoters in the polycondensation reaction and 0.5 molar time a molar amount of the alkali metal element and the molar amount (P) of the phosphorus element is 1.00 to 1.20.

## Patentansprüche

1. Polyethylenterephthalat-Zusammensetzung, die eine Alkalimetallphosphat-Verbindung in einer Menge von 1,0 mol/t oder mehr und 3,0 mol/t oder weniger, berechnet als Alkalimetallelement, enthält und das Element Phosphor in einer Menge von 1,5 mol/t oder mehr und 5,0 mol/t oder weniger enthält, worin ein weißes Fremdmaterial, das das Element Phosphor und das Alkalimetallelement enthält und 50 μm groß oder größer ist, in einem Volumenanteil von 1 ppm vorliegt, die inhärente Viskosität 0,65 dl/g oder mehr und 0,90 dl/g oder weniger beträgt, der Gehalt an einem zyklischen Trimer 0,6 Gew.-% oder weniger beträgt, die Menge an endständigen Carbonsäuregruppen 15 Äqu./t oder weniger beträgt und die Zunahme der Menge an endständigen Carbonsäuregruppen (ΔCOOH) bei Durchführung einer Nasswärmebehandlung (in einer Atmosphäre von 155 °C und 100 % r.F. für 4 h) 30 Äqu./t oder weniger beträgt, wobei die Menge des Elements Phosphor, die Menge an weißem Fremdmaterial, das das Element Phosphor und das Alkalimetallelement enthält, die inhärente Viskosität, der Gehalt an zyklischem Trimer und die Zunahme der Menge an endständigen Carbonsäuregruppen durch in der vorliegenden Beschreibung beschriebene Verfahren gemessen werden.

2. Polyethylenterephthalat-Zusammensetzung nach Anspruch 1, worin der Gehalt an Diethylenglykol mehr 0,8 Gew.-% oder mehr und 1,5 Gew.-% oder weniger beträgt.

3. Polyethylenterephthalat-Zusammensetzung nach Anspruch 2, worin der Gehalt an Diethylenglykol mehr 0,8 Gew.-% oder mehr und 1,0 Gew.-% oder weniger beträgt.

4. Herstellungsverfahren für eine Polyethylenterephthalat-Zusammensetzung, worin Terephthalsäure und Ethylenglykol zu einem niedermolekularen Polymer von Ethylenterephthalat zugesetzt werden, in dem Ethylenterephthalat-Einheiten ein 15-oderweniger-Mer bilden, und eine Polykondensationsreaktion über eine Veresterungsreaktion und eine Festphasenpolymerisation durchgeführt werden, wobei während einer Phase vor Beginn der Veresterungsreaktion bis vor Beginn der Polykondensationsreaktion eine Alkalimetallphosphat-Verbindung in einer Form einer Ethylenglykol-Lösung mit 2,0 mmol/l oder mehr und 30 mmol/l oder weniger zugesetzt wird, damit es in einer Menge von 1,0 mmol/ oder mehr und 3,0 mol/t oder weniger, berechnet als Alkalimetall, bezogen auf die Polyethylenterephthalat-Zusammensetzung, vorliegt.

5. Herstellungsverfahren für eine Polyethylenterephthalat-Zusammensetzung nach Anspruch 4, **dadurch gekennzeichnet, dass** die Ethylenglykol-Lösung der Alkalimetallphosphat-Verbindung als Gemisch mit Terephthalsäure zugesetzt wird.

6. Herstellungsverfahren für eine Polyethylenterephthalat-Zusammensetzung nach Anspruch 4 oder 5, **dadurch gekennzeichnet, dass** die Ethylenglykol-Lösung der Alkalimetallphosphat-Verbindung zu dem niedermolekularen Polymer von Ethylenterephthalat zugesetzt wird, das mit einer Umfangsgeschwindigkeit von 3,0 m/s oder mehr und 30 m/s oder weniger gerührt wird.

7. Herstellungsverfahren für eine Polyethylenterephthalat-Zusammensetzung nach einem der Ansprüche 4 bis 6, worin Phosphorsäure in 0,8facher oder größerer molarer Menge und 1,4facher oder geringerer molaren Menge in Bezug auf die Alkalimetallphosphat-Verbindung zugesetzt wird.

8. Herstellungsverfahren für eine Polyethylenterephthalat-Zusammensetzung nach einem der Ansprüche 4 bis 7, worin das Zusetzen so erfolgt, dass das Molverhältnis (M/P) zwischen der Summe (M) aus der Gesamtmolmenge des Elements Mangan, des Elements Calcium und des Elements Magnesium, die als Promotoren in der Polykondensationsreaktion zugesetzt werden, und dem 0,5fachen der molaren Menge des Alkalimetallelements sowie der molaren Menge (P) des Elements Phosphor 1,00 bis 1,20 beträgt.

## Revendications

1. Composition de téréphtalate de polyéthylène qui contient un composé de type phosphate de métal alcalin en une quantité supérieure ou égale à 1,0 mole/tonne et inférieure ou égale à 3,0 moles/tonne en termes d'élément métal alcalin, et contient un élément phosphore en une quantité supérieure ou égale à 1,5 mole/tonne et inférieure ou égale à 5,0 moles/tonne, dans laquelle une matière étrangère blanche contenant un élément phosphore et un élément métal alcalin et étant supérieure ou égale à 50 μm est présente en une quantité inférieure ou égale à 1 ppm en fraction volumique, une viscosité intrinsèque supérieure ou égale à 0,65 dl/g et inférieure à 0,90 dl/g, une

**EP 2 899 229 B1**

teneur en trimère cyclique inférieure ou égale à 0,6 % en poids, une quantité en groupes terminaux acide carboxylique inférieure ou égale à 15 éq/tonne et une augmentation de la quantité de groupes terminaux acide carboxylique (ΔCOOH) lorsqu'un traitement thermique humide (sous une atmosphère à 155 °C et 100 % d'HR, pendant 4 heures) est réalisé est inférieure ou égale à 30 éq/tonne, dans laquelle la quantité d'élément phosphore, la quantité de matière étrangère blanche contenant un élément phosphore et un élément métal alcalin, la viscosité intrinsèque, la teneur en trimère cyclique et l'augmentation de la quantité de groupes terminaux acide carboxylique sont mesurées par les méthodes décrites dans la présente demande.

2. Composition de téréphtalate de polyéthylène selon la revendication 1, dans laquelle la teneur en diéthylène glycol est supérieure ou égale à 0,8 % en poids et inférieure à 1,5 % en poids.

3. Composition de téréphtalate de polyéthylène selon la revendication 2, dans laquelle la teneur en diéthylène glycol est supérieure ou égale à 0,8 % en poids et inférieure à 1,0 % en poids.

4. Procédé de production d'une composition de résine de téréphtalate de polyéthylène dans lequel de l'acide téréphtalique et de l'éthylène glycol sont ajoutés à un polymère inférieur de téréphtalate d'éthylène, dans lequel les motifs de téréphtalate d'éthylène forment un polymère de 15 motifs ou moins, et une réaction de polycondensation par le biais d'une réaction d'estérification et une polymérisation en phase solide sont réalisées, dans lequel pendant une période allant d'avant l'initiation de la réaction d'estérification jusqu'à avant l'initiation de la réaction de polycondensation, un composé de type phosphate de métal alcalin sous la forme d'une solution d'éthylène glycol supérieure ou égale à 2,0 mmol/litre et inférieure ou égale à 30 mmol/litre est ajouté de sorte à être présent en une quantité supérieure ou égale à 1,0 mole/tonne et inférieure ou égale à 3,0 mol/tonne en termes de métal alcalin par rapport à la composition de téréphtalate de polyéthylène.

5. Procédé de production de la composition de téréphtalate de polyéthylène selon la revendication 4, **caractérisé en ce que** la solution d'éthylène glycol du composé de type phosphate de métal alcalin est ajoutée sous forme de mélange avec de l'acide téréphtalique.

6. Procédé de production de la composition de téréphtalate de polyéthylène selon la revendication 4 ou 5, **caractérisé en ce que** la solution d'éthylène glycol du composé de type phosphate de métal alcalin est ajoutée au polymère inférieur de téréphtalate d'éthylène qui est agité à une vitesse périphérique supérieure ou égale à 3,0 m/s et inférieure ou égale à 30 m/s.

7. Procédé de production de la composition de téréphtalate de polyéthylène selon l'une quelconque des revendications 4 à 6, dans lequel l'acide phosphorique est ajouté en une quantité supérieure ou égale à 0,8 fois molaire et inférieure ou égale à 1,4 fois molaire par rapport au composé de type phosphate de métal alcalin.

8. Procédé de production de la composition de téréphtalate de polyéthylène selon l'une quelconque des revendications 4 à 7, dans lequel l'addition est réalisée de sorte qu'un rapport molaire (M/P) entre la somme (M) d'une quantité molaire totale d'un élément manganèse, d'un élément calcium et d'un élément magnésium ajoutés en tant que promoteurs dans la réaction de polycondensation et 0,5 fois molaire une quantité molaire de l'élément métal alcalin et la quantité molaire (P) de l'élément phosphore est de 1,00 à 1,20.

## REFERENCES CITED IN THE DESCRIPTION

**Patent documents cited in the description**

- WO 2011052290 A

- JP 2007070462 A

**Non-patent literature cited in the description**

- **M. J. MAULICE ; F. HUIZINGA.** *Anal. Chim. Acta,* 1960, vol. 22, 363